# EUROPÄISCHE PATENTSCHRIFT

(11) **EP 1 117 298 B1**
(45) Veröffentlichungstag und Bekanntmachung des Hinweises auf die Patenterteilung: **07.05.2003**
(21) Anmeldenummer: 99947396.0
(22) Anmeldetag: 21.09.1999
(51) Int. Cl.: A01N 47/38

(54) **Verfahren zur selektiven Bekämpfung von Problemunkräutern in Getreide**
Method for selectively controlling problem weeds in crop fields
Procédé pour combattre la poussée des mauvaises herbes dans les champs de céréales

(30) Priorität: 02.10.1998 DE 19845408
(43) Veröffentlichungstag der Anmeldung: 25.07.2001
(73) Patentinhaber: Bayer CropScience AG, 40789 Monheim (DE)
(72) Erfinder: FEUCHT, Dieter, D-40789 Monheim (DE); SANTEL, Hans-Joachim, Leawood, KS 66209 (US); LÜRSSEN, Klaus, D-51469 Bergisch-Gladbach (DE); WETCHOLOWSKY, Ingo, CEP-13280-000 Vinhedo, SP (BR); DAHMEN, Peter, D-41470 Neuss (DE); MÜLLER, Klaus-Helmut, D-40593 Düsseldorf (DE)
(86) Internationale Anmeldenummer: EP9906990
(87) Internationale Veröffentlichungsnummer: WO00019826

(56) Entgegenhaltungen:
- WO-A-98/12923
- US-A- 5 652 372

## Beschreibung

Die Erfindung betrifft die Verwendung der bekannten Verbindung 2-(2-Methoxycarbonyl-phenylsulfonylaminocarbonyl)-4-methyl-5-propoxy-2,4-dihydro-3H-1,2,4-triazol-3-on der weiter unten genannten Formel (I) - alias 2-[[[(4,5-dihydro-4-methyl-5-oxo-3-propoxy-1H-1,2,4-triazol-1-yl)-carbonyl]-amino]-sulfonyl]-benzoesäuremethylester (CAS-Reg.-Nr.: 145026-81-9) - sowie ihrer Salze, insbesondere ihres Natriumsalzes (CAS-Reg.-Nr. 181274-15-7), zur selektiven Bekämpfung von Problemunkräutern in Getreide.

Die mit den erfindungsgemäßen Mitteln besonders gut bekämpfbaren Problemunkräuter sind:
Agropyron, Alopecurus, Avena, Capsella, Amaranthus, Erysimum, Lolium, Phalaris, Poa, Setaria, Sinapis und Thlaspi.

Substituierte Phenylsulfonylaminocarbonyltriazolinone, wie z.B. die Verbindungen 2-(2-Methoxycarbonyl-phenylsulfonylaminocarbonyl)-4-methyl-5-butoxy-2,4-dihydro-3H-1,2,4-triazol-3-on, 2-(2-Methoxycarbonyl-phenylsulfonylaminocarbonyl)-4-methyl-5-ethoxy-2,4-dihydro-3H-1,2,4-triazol-3-on, 2-(2-Methoxycarbonyl-phenylsulfonylaminocarbonyl)-4-methyl-5-isopropoxy-2,4-dihydro-3H-1,2,4-triazol-3-on, 2-(2-Ethoxycarbonyl-phenylsulfonylaminocarbonyl)-4-methyl-5-propoxy-2,4-dihydro-3H-1,2,4-triazol-3-on, 2-(2-Methoxycarbonyl-phenylsulfonylaminocarbonyl)-4-propoxy-5-methyl-2,4-dihydro-3H-1,2,4-triazol-3-on und 2-(2-Methoxycarbonylphenylsulfonylaminocarbonyl)-4-ethyl-5-propoxy-2,4-dihydro-3H-1,2,4-triazol-3-on sowie deren Salze, Verfahren zur Herstellung dieser Verbindunen und ihre Verwendbarkeit als Herbizide, sind Gegenstand von älteren Patentanmeldungen (vgl. EP-341 489, EP-422 469, EP-507 171, US-5 534 486). Die einzelnen vorausgehend genannten substituierten Phenylsulfonylaminocarbonyltriazolinone haben eine zur erfindungsgemäß zu verwendenden Verbindung (I) sehr ähnliche Molekülstruktur, weisen jedoch - im Gegensatz zu dieser - bei bestimmten Unkrautpflanzen Wirkungsschwächen oder Wirkungslücken auf.

Synergistische Mischungen enthaltend die Verbindung 2-(2-Methoxycarbonylphenylsulfonylaminocarbonyl)-4-methyl-5-propoxy-2,4-dihydro-3H-1,2,4-triazol-3-on sowie Salze davon und andere Herbizide sind in der WO 98/12923 beschrieben.

Überraschenderweise wurde nun gefunden, dass die Verbindung 2-(2-Methoxycarbonyl-phenylsulfonylaminocarbonyl)-4-methyl-5-propoxy-2,4-dihydro-3H-1,2,4-triazol-3-on (I) sowie Salze hiervon, insbesondere das Natriumsalz der Verbindung der Formel (I), bei sehr guter Verträglichkeit gegenüber Getreidearten, wie insbesondere Weizen, im Vergleich mit den oben genannten strukturell ähnlichen Verbindungen, erheblich stärkere Wirkung gegen einige schwer bekämpfbare Unkräuter in Getreidekulturen aufweisen und somit zur effizienten und selektiven Bekämpfung von Unkräutern in Getreide, insbesondere in Weizen, besonders gut geeignet sind. Die bei den obengenannten, mit (I) eng verwandten Vergleichsverbindungen beobachteten Wirkungslücken treten im Unkrautspektrum der Verbindung (I) und ihrer Salze nicht auf.

Gegenstand der Erfindung ist die Verwendung der Verbindung 2-(2-Methoxycarbonyl-phenylsulfonylaminocarbonyl)-4-methyl-5-propoxy-2,4-dihydro-3H-1,2,4-triazol-3-on der Formel (I) 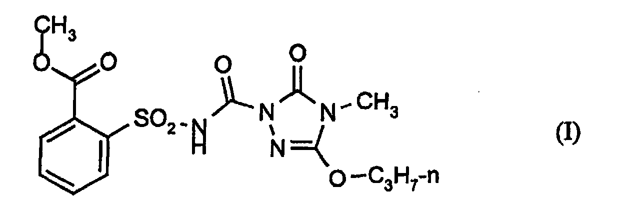 und/oder der Salze der Verbindung der Formel (I), insbesondere dessen Natriumsalz [in den Anwendungsbeispielen als "(I)-Na-Salz" bezeichnet] zur selektiven Bekämpfung von bestimmten Unkräutern in Getreidekulturen, insbesondere in Weizenkulturen.

Gegenstand der Erfindung ist weiter ein Verfahren zur selektiven Bekämpfung von bestimmten Unkräutern in Getreidekulturen, insbesondere in Weizenkulturen, welches dadurch gekennzeichnet ist, daß man die Verbindung 2-(2-Methoxycarbonyl-phenylsulfonylaminocarbonyl)-4-methyl-5-propoxy-2,4-dihydro-3H-1,2,4-triazol-3-on der Formel (I) und/oder Salze der Verbindung der Formel (I), insbesondere ihr Natriumsalz, zusammen mit oberflächenaktiven Mitteln und/oder üblichen Streckmitteln in Getreidekulturen appliziert.

Die Verbindung der Formel (I) und ihr Na-Salz sind bereits bekannt (vgl. US-5 534 486 - Beispiele 72 und 320).

Die Verbindung der Formel (I) und ihre Salze zeigen eine breite herbizide Wirksamkeit. Sie können z.B. zur Bekämpfung der folgenden Unkräuter verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera, Aegilops, Phalaris.

Die Verwendung der Verbindung (I) und ihrer Salze ist jedoch keineswegs auf diese Gattungen beschränkt, sondern erstreckt sich in gleicher Weise auch auf andere Pflanzen.

Die Verbindung der Formel (I) sowie ihre Salze zeigen starke herbizide Wirksamkeit und ein breites Wirkungsspektrum bei Anwendung auf dem Boden und auf oberirdische Pflanzenteile. Sie eignen sich zur selektiven Bekämpfung von monokotylen und dikotylen Unkräutern in monokotylen Kulturen, vor allem in Getreide, insbesondere in Weizen, sowohl im Vorauflauf- als auch im Nachauflauf-Verfahren.

Als mit der Verbindung der Formel (I) und ihren Salzen, insbesondere ihrem Natriumsalz, erfindungsgemäß besonders gut bekämpfbare Problemunkräuter, deren Bekämpfung sowohl mit herkömmlichen Herbiziden als auch mit neueren Verbindungen ähnlicher Molekülstruktur weniger gut gelingt, seien Agropyron, Alopecurus, Amaranthus, Avena, Bromus, Capsella, Erysimum, Lolium, Phalaris, Poa, Setaria, Sinapis und Thlaspi genannt.

Die Verbindung der Formel (I) und ihre Salze, insbesondere ihr Natriumsalz, können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: aromatische Kohlenwasserstoffe wie Xylol, Toluol oder Alkylnaphthaline, chlorierte aromatische Verbindungen wie Chlorbenzole, chlorierte aliphatische Verbindungen wie Chlorethylene oder Methylenchlorid, aliphatische Kohlenwasserstoffe wie Cyclohexan oder Paraffine, Erdölfraktionen, mineralische und pflanzliche Öle, Alkohole wie Butanol oder Glykol sowie deren Ether und Ester, Ketone wie Aceton, Methylethylketon, Methylisobutylketon oder Cyclohexanon, stark polare Lösungsmittel wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Verbindung der Formel (I) und ihre Salze können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide in Frage, beispielsweise Amidosulfuron, Bentazon, Bromoxynil, Carfentrazone(-ethyl), Cinidon(-ethyl), Clodinafop(-propargyl), Clopyralid, Chlorsulfuron, Chlortoluron, Cyclosulfamuron, 2,4-D, Diclofop(-methyl), Difenzoquat, Diflufenican, Floransulam, Flupyrsulfuron(-methyl, -sodium), Pyraflufen(-ethyl), Ethoxyfen, Fenoxaprop(-ethyl), Fluoroglycofen(-ethyl), Flupropacil, Fluroxypyr, Iodosulfuron, Isoproturon, Mecoprop, Metosulam, Metribuzin, Metsulfuron(-methyl), Pendimethalin, Prosulfocarb, Pyridate, Sulfosulfuron, Thifensulfuron(-methyl), Tralkoxydim, Triasulfuron, Tribenuron- (-methyl), Trifluralin.

Auch eine Mischung mit anderen bekannten Wirkstoffen, wie Fungiziden, Insektiziden, Akariziden, Ncmatiziden, Schutzstoffen gegen Vogelfraß, Pflanzennährstoffen und Bodenstrukturverbesserungsmitteln ist möglich.

Die Verbindung der Formel (I) und ihre Salze können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Verbindung der Formel (I) und ihre Salze können sowohl vor als auch nach dem Auflaufen der Pflanzen appliziert werden. Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 1 g und 1 kg Wirkstoff pro Hektar Bodenfläche, vorzugsweise zwischen 5 g und 0,5 kg pro ha.

Die Verwendung der Verbindung der Formel (I) und ihrer Salze geht aus den nachfolgenden Beispielen hervor.

### Anwendungsbeispiele:

In den Anwendungsbeispielen werden die nachstehend aufgeführten Verbindungen als Vergleichssubstanzen herangezogen: 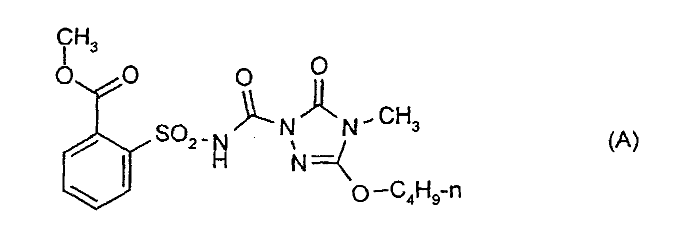 2-(2-Methoxycarbonyl-phenylsulfonylaminocarbonyl)-4-methyl-5-butoxy-2,4-dihydro-3H-1,2,4-triazol-3-on (bekannt aus EP-507 171, US-5 534 486 - Bcispiel 40) 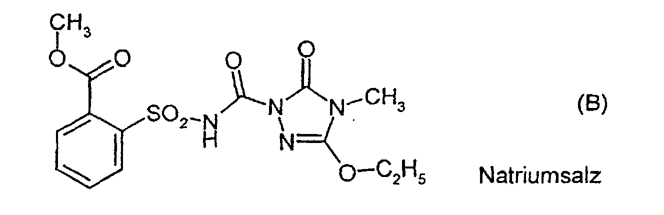 2-(2-Methoxycarbonyl-phenylsulfonylaminocarbonyl)-4-methyl-5-ethoxy-2,4-dihydro-3H-1,2,4-triazol-3-on - Natriumsalz (bekannt aus US-5 534 486 - Beispiel 185) 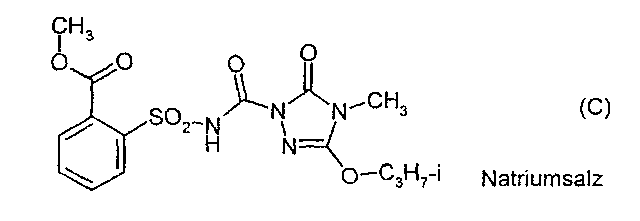 2-(2-Methoaycarbonyl-phenylsulfonylaminocarbonyl)-4-methyl-5-isopropoxy-2,4-dihydro-3H-1,2,4-triazol-3-on- Natriumsalz (bekannt aus US-5 534 486 - Beispiel 259) 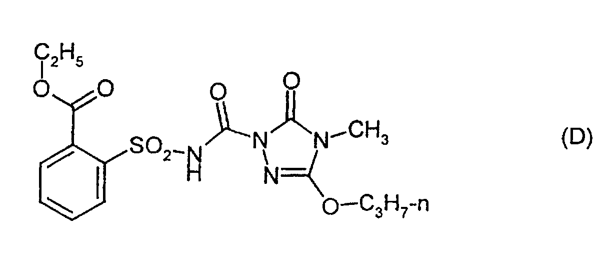 2-(2-Ethoxycarbonyl-phenylsulfonylaminocarbonyl)-4-methyl-5-propoxy-2,4-dihydro-3H-1,2,4-triazol-3-on (im Anspruch von EP-507 171 und US-5 534 486) 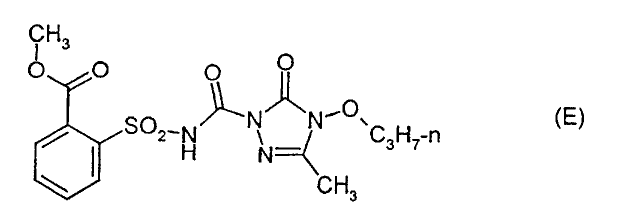 2-(2-Methoxycarbonyl-phenylsulfonylaminocarbonyl)-4-propoxy-5-methyl-2,4-dihydro-3H-1,2,4-triazol-3-on (im Anspruch von EP-341 489 und EP-422 469 sowie US-5 057 144) 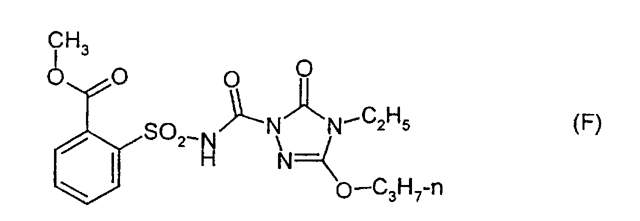 2-(2-Methoxycarbonyl-phenylsulfonylaminocarbonyl)-4-ethyl-5-propoxy-2,4-dihydro-3H-1,2,4-triazol-3-on (im Anspruch von EP-507 171 und US-5 534 486)

### Beispiel A

### Post-emergence-Test / Gewächshaus

| | |
|---|---|
| Lösungsmittel | 5 Gewichtsteile Aceton |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben, so, daß die jeweils gewünschten Wirkstoffmengen pro Flächeneinheit ausgebracht werden. Die Konzentration der Spritzbrühe wird so gewählt, daß in 500 1 Wasser/ha die jeweils gewünschten Wirkstoffmengen ausgebracht werden.

Nach drei Wochen wird der Schädigungsgrad der Pflanzen bonitiert in % Schädigung im Vergleich zur Entwicklung der unbehandelten Kontrolle.
Es bedeuten:
0 % = keine Wirkung (wie unbehandelte Kontrolle)
100 % = totale Vernichtung

In diesem Test zeigt beispielsweise das Natriumsalz der Verbindung der Formel (I) bei einer Aufwandmenge von 60 g/ha sehr gute Verträglichkeit gegenüber Kulturpflanzen, wie z.B. Weizen, und sehr starke Wirkung (Wirkungsgrad 80% bis 100%) gegen Unkräuter, wie z.B. Agropyron, Alopecurus, Avena, Bromus und Lolium, während die Vergleichsverbindungen (A), (C), (D), (E) und (F) erheblich schwächere herbizide Wirkung zeigen und die Vergleichsverbindungen (B) und (F) gegenüber Weizen nicht ganz verträglich sind. ["ai." = "active ingredient" = "Wirkstoff"].

**Tabelle A:**

| **Post emergence-Test/Gewächshaus** | | | | | | | |
|---|---|---|---|---|---|---|---|
| Wirkstoff | Aufwandmenge g ai./ha) | Weizen | Agropyron | Alopecurus | Avena | Bromus | Lolium |
| Vergleichsverbindung (A) | 60 | 0 | 0 | 0 | 50 | 0 | 0 |
| | | | | | | | |
| Vergleichsverbindung (B) | 30 | 60 | 90 | 90 | 90 | 80 | 90 |
| | | | | | | | |
| Vergleichsverbindung (C) | 60 | 0 | 60 | 70 | 50 | 70 | 70 |
| | | | | | | | |
| Vergleichsverbindung (D) | 60 | 0 | 70 | - | 20 | 80 | 30 |
| | | | | | | | |
| Vergleichsverbindung (E) | 250 | 0 | - | 70 | 0 | 50 | 50 |
| | | | | | | | |
| Vergleichsverbindung (F) | 60 | 20 | 50 | 50 | 40 | 50 | 30 |
| | | | | | | | |
| erfindungsgemäß: (I)-Na-Salz | 60 | 0 | 100 | 90 | 80 | 95 | 80 |

### Beispiel B

### Pre-emergence-Test / Gewächshaus

| | |
|---|---|
| Lösungsmittel | 5 Gewichtsteile Aceton |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät. Nach ca. 24 Stunden wird der Boden so mit der Wirkstoffzubereitung besprüht, daß die jeweils gewünschte Wirkstoffmenge pro Flächeneinheit ausgebracht wird. Die Konzentration der Spritzbrühe wird so gewählt, daß in 500 Liter Wasser pro Hektar die jeweils gewünschte Wirkstoffmenge ausgebracht wird.

Nach drei Wochen wird der Schädigungsgrad der Pflanzen bonitiert in % Schädigung im Vergleich zur Entwicklung der unbehandelten Kontrolle.
Es bedeuten:
0 % = keine Wirkung (wie unbehandelte Kontrolle)
100% = totale Vernichtung

In diesem Test zeigt beispielsweise das Natriumsalz der Verbindung der Formel (I) bei Aufwandmengen von 15 g/ha bis 60 g/ha sehr gute Verlräglichkeit gegenüber Kulturpflanzen, wie z.B. Weizen, und sehr starke Wirkung (Wirkungsgrad 80% bis 100%) gegen Unkräuter, wie z.B. Agropyron, Alopecurus, Avena, Bromus, Lolium, Poa, Setaria und Sinapis, während die Vergleichsverbindungen (A), (C), (D), (E) und (F) erheblich schwächere herbizide Wirkung zeigen und die Vergleichsverbindung (B) gegenüber Weizen nicht ganz verträglich ist.

**Tabelle B1:**

| **Pre emergence-Test/Gewächshaus** | | | | | | | |
|---|---|---|---|---|---|---|---|
| Wirkstoff | Aufwandmenge (g ai./ha) | Weizen | Alopecurus | Avena | Bromus | Lolium | Setaria |
| | | | | | | | |
| Vergleichsverbindung (A) | 500 | 0 | 20 | 0 | 30 | 0 | 0 |
| | | | | | | | |
| erfindungsgemäß: (I)-Na-Salz | 30 | 0 | 95 | 90 | 90 | 80 | 90 |

**Tabelle B2:**

| **Pre emergence-Test/Gewächshaus** | | | | | | | | | |
|---|---|---|---|---|---|---|---|---|---|
| Wirkstoff | Aufwandmenge (g ai./ha) | Weizen | Agropyron | Alopecurus | Avena | Bromus | Lolium | Poa | Setaria |
| | | | | | | | | | |
| Vergleichsverbindung (C) | 30 | 0 | 50 | 70 | 70 | 70 | - | 80 | 70 |
| | | | | | | | | | |
| Vergleichsverbindung (D) | 30 | 0 | 60 | 70 | 30 | - | 30 | 70 | 50 |
| | | | | | | | | | |
| erfindungsgemäß: (I)-Na-Salz | 30 | 0 | 90 | 95 | 90 | 90 | 80 | 95 | 90 |

**Tabelle B3:**

| **Pre emergence-Test/Gewächshaus** | | | | | | | | | |
|---|---|---|---|---|---|---|---|---|---|
| Wirkstoff | Aufwandmenge (g ai./ha) | Weizen | Agropyron | Alopecurus | Avena | Bromus | Poa | Amaranthus | Sinapis |
| | | | | | | | | | |
| Vergleichsverbindung (B) | 15 | 40 | 40 | - | 60 | - | 70 | 70 | 70 |
| | | | | | | | | | |
| Vergleichsverbindung (F) | 15 | 0 | 0 | 40 | 0 | 20 | 0 | 70 | 70 |
| | | | | | | | | | |
| erfindungsgemäß: (I)-Na-Salz | 15 | 0 | 90 | 95 | 80 | 90 | 90 | 95 | 90 |

**Tabelle B4:**

| **Pre emergence-Test/Gewächshaus** | | | | | | | |
|---|---|---|---|---|---|---|---|
| Wirkstoff | Aufwandmenge (g ai./ha) | Weizen | Alopecurus | Avena | Bromus | Lolium | Setaria |
| | | | | | | | |
| Vergleichsverbindung (E) | 250 | 0 | 80 | 0 | 0 | 40 | 0 |
| | | | | | | | |
| erfindungsgemäß: (I)-Na-Salz | 60 | 0 | 95 | 90 | 95 | 80 | 90 |

### Beispiel C

### Post emergence-Versuche / Freiland

Das Natriumsalz der Verbindung der Formel (I) wurde unter Freilandbedingungen in Winterweizen in Deutschland und Frankreich gegen wirtschaftlich bedeutende Unkräuter geprüft. Die Anlage der Kleinparzellenversuche erfolgte auf Anbauflächen der landwirtschaftlichen Praxis, wobei die Anbau- und Witterungsbedingungen über den Untersuchungszeitraum als repräsentativ angesehen werden können. Es wurden bevorzugt Flächen mit besonders hohem Unkrautbesatz ausgewählt.

Die Applikation des Wirkstoffs erfolgte im Nachauflauf (Frühjahr) flächig im Spritzverfahren mit mittlerer Tropfengröße. Zur Herstellung einer zweckmäßigen Wirkstoffzubereitung wurde der Wirkstoff als 70 WP oder 70 WG (70 % w/w wasserdispergierbares Pulver oder Granulat) formuliert und mit praxisüblichen Wasseraufwandmengen ausgebracht.

Zur Beurteilung der Kulturverträglichkeit wurden 1 bis 8 Wochen nach der Behandlung Pflanzenwuchshemmungen oder Aufhellungen der Blattfläche in % Schädigung im Vergleich zur Entwicklung der unbehandelten Kontrolle bonitiert. Die herbizide Wirksamkeit wurde zu mehreren Terminen nach der Behandlung auf Basis der Unkrautentwicklung als % Reduktion im Vergleich zur unbehandelten Kontrolle erfaßt. Es bedeuten:
0 % = keine Schädigung der Kultur bzw. keine herbizide Wirkung,
100 % = totale Vernichtung der Kultur bzw. der Unkräuter.

Die durchgeführten Versuche zeigen, daß das Natriumsalz der Verbindung der Formel (I) besonders gut zur Bekämpfung der schwer bekämpfbaren perennierenden Art Agropyron repens sowie der annuellen Arten Alopecurus myosuroides, Apera spica-venti, Capsella bursa-pastoris und Sinapis arvensis in Getreide geeignet ist. ["% w/w" = Gewichtsprozent]

**Tabelle C**

| **Post emergence-Versuche / Freiland** | | |
|---|---|---|
| Testpflanzen | Anzahl Versuche | (I)-Na-Salz (42 g a.i. /ha bis 45 g a.i. /ha) herbizide Wirkung (%) |
| Agropyron repens | 83 | 89 |
| Alopecurus myosuroides | 204 | 91 |
| Apera spica-venti | 87 | 94 |
| Poa annua | 5 | 67 |
| Capsella bursa-pastoris | 6 | 100 |
| Sinapis arvensis | 4 | 100 |
| Kulturschädigung (Weizen) | 439 | 2 |

### Beispiel D

### Post emergence-Versuche / Freiland

Das Natriumsalz der Verbindung der Formel (1) wurde unter Freilandbedingungen in Winterweizen-Hauptanbaugebieten der USA (Pacific Northwest, North Central Area, Central Plains) gegen wirtschaftlich bedeutende Unkräuter geprüft. Die Anlage, Durchführung und Auswertung der Versuche entsprach Beispiel C. Die Applikation des Wirkstoffs erfolgte im Herbst. Durch den Zusatz von handelsüblichen oberflächenaktiven Substanzen (OAS) in vom jeweiligen Hersteller empfohlenen Konzentrationen wurde die Benetzung der Pflanzen gefördert.

Die Versuche zeigen, daß das Natriumsalz der Verbindung der Formel (I) besonders gut zur Bekämpfung von Bromus-Arten, Erysimum cheiranthoides und Thlaspi arvense in Getreide geeignet ist.

**Tabelle D**

| **Post emergence-Versuche / Freiland** | | |
|---|---|---|
| Testpflanzen | Anzahl Versuche | (I)-Na-Salz (42 g a.i./ha bis 45 g a.i./ha) herbizide Wirkung (%) |
| Bromus secalinus | 24 | 95 |
| Bromus tectorum | 37 | 90 |
| Erysimum cheiranthoides | 10 | 89 |
| Thlaspi arvense | 7 | 100 |
| Kulturschädigung (Weizen) | 78 | 2 |

### Beispiel E

### Post emergence Versuche / Freiland

Das Natriumsalz der Verbindung der Formel (I) wurde unter Freilandbedingungen in einem Beregnungsweizenanbaugebiet der USA (Kalifornien) gegen wirtschaftlich bedeutende Unkräuter geprüft. Die Anlage, Durchführung und Auswertung der Versuche entsprach Beispiel D.

Die durchgeführten Versuche zeigen, daß das Natriumsalz der Verbindung der Formel (I) besonders gut zur Bekämpfung von Phalaris-Arten in Getreide geeignet ist.

**Tabelle E**

| **Post emergence-Test / Freiland** | | |
|---|---|---|
| Testpflanzen | Anzahl Versuche | (I)-Na-Salz + OAS (42 g a.i./ha bis 45 g a.i./ha) herbizide Wirkung (%) |
| Phalaris minor | 2 | 93 |
| Phalaris paradoxa | 8 | 99 |
| Kulturschädigung (Weizen) | 7 | 5 |

## Patentansprüche

1. Verfahren zur selektiven Bekämpfung eines oder mehrerer Unkräuter ausgewählt aus der Reihe Agropyron, Alopecurus, Amaranthus, Avena, Capsella, Erysimum, Lolium, Phalaris, Poa, Setaria, Sinapis und Thlaspi in Getreidekulturen, **dadurch gekennzeichnet, dass** man die Verbindung 2-(2-Methoxycarbonylphenylsulfonylamonicarbonyl)-4-methyl-5-propoxy-2,4-dihydro-3H-1,2,4-triazol-3-on und/oder die Salze dieser Verbindung in den Getreidekulturen appliziert.

2. Verfahren nach Anspruch 1, **dadurch gekennzeichnet, dass** die Getreidekultur Weizen ist.

3. Verfahren nach Anspruch 1 oder 2, **dadurch gekennzeichnet, dass** die Unkräuter ausgewählt sind aus der Reihe Agropyron, Alopecurus, Avena, Lolium, Poa, Setaria and Sinapis.

4. Verfahren nach Anspruch 1 oder 2, **dadurch gekennzeichnet, dass** das Unkraut eine Alopecurus-Art ist.

5. Verfahren nach Anspruch 1 oder 2, **dadurch gekennzeichnet, dass** das Unkraut eine Agropyron-Art ist.

6. Verfahren nach einem der Ansprüche 1 bis 5, **dadurch gekennzeichnet, dass** die Verbindung 2-(2-Methoxycarbonyl-phenylsulfonylaminocarbonyl)-4-methyl-5-propoxy-2,4-dihydro-3H-1,2,4-triazol-3-on und/oder ihre Salze in einer Aufwandmenge von 15 bis 60 g/ha appliziert werden.

7. Verfahren nach Anspruch 1, **dadurch gekennzeichnet, dass** das Unkraut Alopecurus und die Getreidekultur Winterweizen ist.

8. Verfahren nach Anspruch 1, **dadurch gekennzeichnet, dass** das Unkraut Agropyron und die Getreidekultur Winterweizen ist.

9. Verfahren nach Anspruch 7 oder 8, **dadurch gekennzeichnet, dass** 2-(2-Methoxycarbonyl-phenylsulfonylaminocarbonyl)-4-methyl-5-propoxy-2,4-dihydro-3H-1,2,4-triazol-3-on und/oder die Salze dieser Verbindung als 70 WP oder 70 WG Formulierung appliziert werden.

10. Verwendung der Verbindung 2-(2-Methoxycarbonyl-phenylsulfonylaminocarbonyl)-4-methyl-5-propoxy-2,4-dihydro-3-H-1,2,4-triazol-3-on und/oder ihrer Salze in einem der Verfahren nach den Ansprüchen 1 bis 9.

## Revendications

1. Procédé de lutte sélective contre une ou plusieurs mauvaises herbes choisies dans la série Agropyron, Alopecurus, Amaranthus, Avena, Capsella, Erysimum, Lolium, Phalaris, Poa, Setaria, Sinapis et Thlaspi dans des cultures de céréales, **caractérisé en ce qu'**on applique le composé 2-(2-méthoxycarbonylphénylsulfonylaminocarbonyl)-4-méthyl-5-propoxy-2,4-dihydro-3H-1,2,4-triazole-3-one et/ou les sels de ce composé aux cultures de céréales.

2. Procédé suivant la revendication 1, **caractérisé en ce que** la culture de céréales est une culture de blé.

3. Procédé suivant la revendication 1 ou 2, **caractérisé en ce que** les mauvaises herbes sont choisies dans la série Agropyron, Alopecurus, Avena, Lolium, Poa, Setaria et Sinapis.

4. Procédé suivant la revendication 1 ou 2, **caractérisé en ce que** la mauvaise herbe est une espèce du genre Alopecurus.

5. Procédé suivant la revendication 1 ou 2, **caractérisé en ce que** la mauvaise herbe est une espèce du genre Agropyron.

6. Procédé suivant l'une des revendications 1 à 5, **caractérisé en ce que** le composé 2-(2-méthoxycarbonyl-phénylsulfonylaminocarbonyl)-4-méthyl-5-propoxy-2,4-dihydro-3H-1,2,4-triazole-3-one et/ou ses sels sont appliqués en une quantité de 15 à 60 g/ha.

7. Procédé suivant la revendication 1, **caractérisé en ce que** la mauvaise herbe est une espèce du genre Alopecurus et la culture de céréales est une culture de blés d'hiver.

8. Procédé suivant la revendication 1, **caractérisé en ce que** la mauvaise herbe est une espèce du genre Agropyron et la culture de céréales est une culture de blés d'hiver.

9. Procédé suivant la revendication 7 ou 8, **caractérisé en ce que** la 2-(2-méthoxycarbonylphényl-sulfonylaminocarbonyl)-4-méthyl-5-propoxy-2,4-dihydro-3H-1,2,4-triazole-3-one et/ou les sels de ce composé sont appliqués comme formulation en poudre ou en granulés dispersable dans l'eau à 70 % en poids/poids.

10. Utilisation du composé 2-(2-méthoxycarbonylphényl-sulfonylaminocarbonyl)-4-méthyl-5-propoxy-2,4-dihydro-3H-1,2,4-triazole-3-one et/ou de ses sels dans un procédé suivant les revendications 1 à 9.

## Claims

1. Method for the selective control of one or more weeds selected from the group consisting of agropyron, alopecurus, amaranthus, avena, capsella, erysimum, lolium, phalaris, poa, setaria, sinapis and thlaspi in crops of cereals, **characterized in that** the compound 2-(2-methoxycarbonylphenylsulfonylaminocarbonyl)-4-methyl-5-propoxy-2,4-dihydro-3H-1,2,4-triazol-3-on and/or the salts of this compound are applied in the crops of cereals.

2. Method according to claim 1, **characterized in that** the crop of cereals is wheat.

3. Method according to claim 1 or 2, **characterized in that** the weeds are selected from the group consisting of agropyron, alopecurus, avena, lolium, poa, setaria and sinapis.

4. Method according to claim 1 or 2, **characterized in that** the weed is an alopecurus species.

5. Method according to claim 1 or 2, **characterized in that** the weed is an agropyron species.

6. Method according to any of claims 1 to 5, **characterized in that** the compound 2-(2-methoxycarbonyl-phenylsulfonylaminocarbonyl)-4-methyl-5-propoxy-2,4,-dihydro-3H-1,2,4-triazol-3-on and/or its salts is/are applied in an application rate of 15 to 60 g/ha.

7. Process according to claim 1, **characterized in that** the weed is alopecurus and the crop of cereals is winter wheat.

8. Method according to claim 1, **characterized in that** the weed is agropyron and the crop of cereals is winter wheat.

9. Method according to claim 7 or 8, **characterized in that** 2-(2-methoxycarbonyl-phenylsulfonylaminocarbonyl)-4-methyl-5-propoxy-2,4-dihydro-3H-1,2,4-triazol-3-on and/or the salts of this compound is/are applied as a 70 wp or 70 wg formulation.

10. Use of the compound 2-(2-methoxycarbonyl-phenylsulfonylaminocarbonyl)-4-methyl-5-propoxy-2,4-dihydro-3H-1,2,4-triazol-3-on and/or its salts in one of the methods according to claims 1 to 9.
